Europäisches Patentamt

(19) European Patent Office

Office européen des brevets

(11) Publication number: **0 281 535**
**B1**

(12) **EUROPEAN PATENT SPECIFICATION**

<table>
<tr><td>(45) Date of publication of the patent specification:<br>18.07.90</td><td>(51) Int. Cl.⁵: <b>F01K 23/06</b>, F02G 5/02,<br>F02G 5/04</td></tr>
</table>

(21) Application number: **88850059.2**

(22) Date of filing: **22.02.88**

(54) **A heat and power co-generation plant.**

<table>
<tr>
<td>(30) Priority: <b>25.02.87 SE 8700785</b></td>
<td>(73) Proprietor: <b>PPS Project Promotion Services AB,<br>Fiskhamnsvägen 8 D, S-414 58 Göteborg(SE)</b></td>
</tr>
<tr>
<td>(43) Date of publication of application:<br><b>07.09.88 Bulletin 88/36</b></td>
<td>(72) Inventor: <b>Stenhede, Thomas, Offerstensvägen 36,<br>S-433 70 Partille(SE)</b></td>
</tr>
<tr>
<td>(45) Publication of the grant of the patent:<br><b>18.07.90 Bulletin 90/29</b></td>
<td>(74) Representative: <b>MacFie, W.R. et al, Albihn West AB<br>Stora Nygatan 15, S-411 08 Göteborg(SE)</b></td>
</tr>
<tr>
<td>(84) Designated Contracting States:<br><b>AT BE CH DE ES FR GB GR IT LI LU NL SE</b></td>
<td></td>
</tr>
<tr>
<td>(56) References cited:<br><b>WO-A-82/02762<br>DE-A- 2 203 084<br>DE-A- 3 245 865<br>DE-C- 87 435<br>FR-A- 2 325 812<br>GB-A- 2 032 598<br>US-A- 3 219 105<br>US-A- 4 470 255<br>US-A- 4 586 338<br><br>PATENT ABSTRACTS OF JAPAN, vol. 10,<br>no.365 (M-542)[2422], 6th December 1986; &<br>JP-A-61 160 506 (KAWASAKI HEAVY IND.<br>LTD) 21-07-1986</b></td>
<td></td>
</tr>
</table>

## Description

US specification 4 470 255 shows an electric power generation plant including a gas turbine and a fluid bed reactor, where the exhaust gases from the turbine is used as fluidizing agent in the reactor. The plant is based upon a coal volatilization, where the gas is burnt in the turbine and the core is transferred to the reactor.

There is, however, often an obvious need of simultaneous production of heat and electricity, and many different production plants have been proposed.

A low speed diesel engine, will operate with a satisfactory efficiency, but produces large volumes of exhaust gases, which contain components which are detrimental to the environment.

In circulating fluid bed boiler, a CFB-boiler, various kinds of fuel may be burnt with a high efficiency and with a low content of environmental contaminants in its exhaust. The operation will however require large quantities of fluidizing gas, usually air, and necessitates a big fan power input.

The exhaust gases from a diesel engine will contain a sufficient amount of oxygen for maintaining a combustion, at least partly, and by conducting the engine exhaust gases to the CFB-boiler as fluidization gas, the fan work at the boiler as well as the air preheating arrangements are reduced. Furthermore a destruction of environmentally detrimental constituents in the exhaust gases is obtained, in the first hand NOx and unburnt hydrocarbons.

A co-generation plant according to the invention accordingly refer to an internal combustion engine driving an electric generator, and a CFB-boiler, the steam generating parts of which are connected to a steam turbine driving a further electric generator means being provided for conducting the exhaust gases from the internal combustion engine as fluidizing gas to the CFB-boiler, and the invention is characterized by the internal combustion engine being a diesel engine, the plant further including a heat exchanger connected to a heat consumer outside the plant for condensing the exhaust steam from the turbine into feed water for the boiler.

The plant advantageously includes means for conveying combustion residues from the CFB-boiler to a heat exchanger, forming part of a circuit comprising a heat exchanger in the feed water supply conduit.

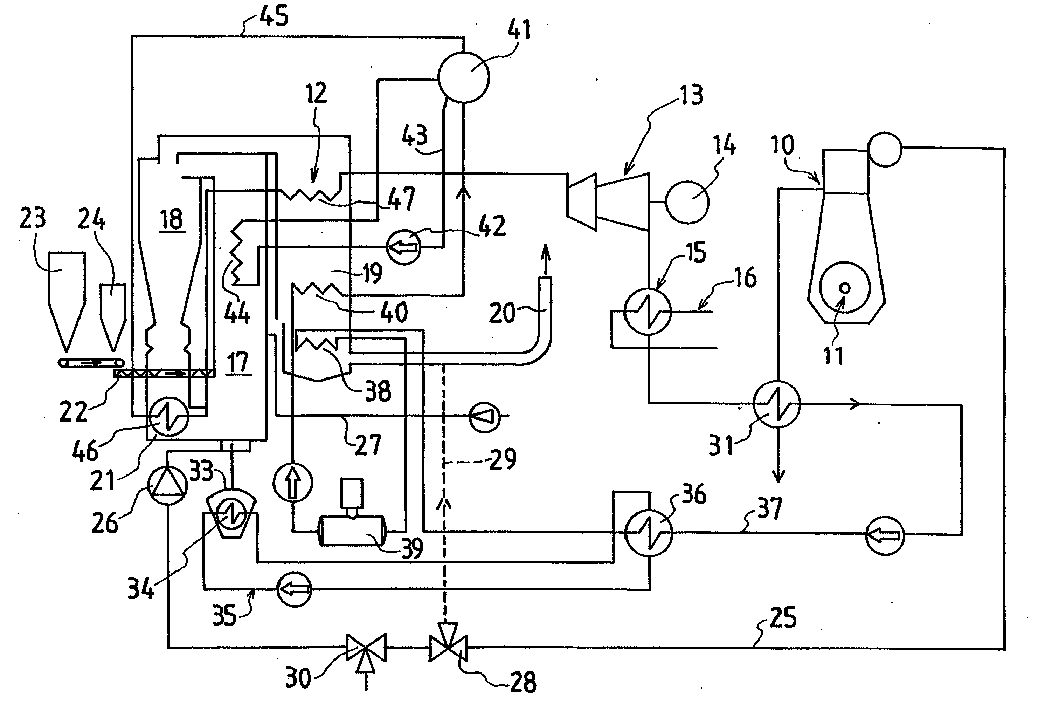

The invention will below be described with reference to the accompanying drawing, which schematically shows a heat and power co-generation plant according to the invention.

The heat and power co-generation plant shown in the drawing includes a diesel engine 10, which drives a first electric generator 11, as well as a steam boiler 12, having a combustion part operating according to the circulating bed principle (CFB), and which delivers steam to a turbine 13, driving a second electric generator 14. The plant further includes a heat exchanger 15, which operates as a condensor for the steam turbine 13, and is connected to a heat consumer outside the plant, for instance a district heating circuit 16.

The CFB-boiler, in a conventional manner, includes a combustion reactor 17, the upper end of which is connected to a particle separator 18 of the cyclone type. From the latter the purified gases are conducted through a shaft 19 containing heat absorbing surfaces to a smoke stack 20. Particles separated out in the cyclone 18 are collected in a lock 21, and transferred back to the reactor 17.

The reactor may be designed to burn fuels of arbitrary kind.

The drawing shows a conveyor 22 for feeding fuel from a hopper 23, and inert bed material (sand), and possibly crushed limestone from a hopper 24 into the reactor. Finely divided garbage and household waste can advantageously be burnt in a circulating fluid bed reactor.

The hot exhaust gases from the diesel engine 10 are fed through a conduit 25 and a fan 26 to the CFB-boiler, to serve in the first hand as primary fluidizing gas. The oxygen content is sufficient to maintain at least a partial combustion. Means 27 are provided for supplying secondary gas, either from the conduit 25, or from the ambient atmosphere, suitable pre-heating means (not shown) being provided. An efficient destruction of the content of NOx and other contaminant in the diesel exhaust gases will occur in the reactor.

The conduit 25 includes valve means 28, through which the diesel exhaust gases may be conveyed directly to the smoke stack 20, by way of a branch conduit 29, for instance when the engine is to be started. A second valve means 30 permits the fan 26 to draw air directly from the atmosphere, when the diesel engine is not running, or as addition to the diesel exhaust gases.

The steam passing through the turbine 13, will be condensed in the heat exchanger 15, connected to a consumer 16 outside the plant and is re-introduced in the CFB-boiler as feed water. The feed water will first pass a heat exchanger 31, heated by the cooling water of the diesel engine 10.

Combustion residues withdrawn from the reactor 17 contain a large amount of heat, and are collected in a receptacle 33 enclosing a heat exchanger 34. This forms part of a closed circuitry 35, including a second heat exchanger 36 in the feed water conduit 37.

The latter finally passes a heating coil 38 in the shaft 19, and the feed water is, by way of a de-aerator 39, conveyed to a steam generating coil 40 in the shaft 19. This coil is connected to the steam drum 41 of the boiler.

A circuit 43 including a circulation pump 42 contains further heating coils 44 in shaft 17.

Steam from the drum 41 is by way of a conduit 45, a heat exchanger 46 in the particle lock 21 and a superheating coil 47 in the shaft 19, conveyed to the turbine 13.

The plant described above and shown in the drawing may be modified in many ways within the scope of the appended claims. It is evident for a man skilled in the art, that, depending upon expected variation in the power requirements, two or more engines may be connected to the boiler, and that the plant will in-

clude control and supervision devices which are not mentioned here.

## Claims

1. A heat and power co-generation plant including an internal combustion engine (10) driving an electric generator, and a CFB-boiler (12), the steam generating parts (40, 41, 44, 46, 47) of which are connected to a steam turbine (13) driving a further electric generator (14) means being provided for conducting the exhaust gases from the internal combustion engine as fluidizing gas to the CFB-boiler (12) characterized in the internal combustion engine being a diesel engine, the plant further including a heat exchanger (15) connected to a heat consumer (16) outside the plant for condensing the exhaust steam from the turbine (13) into feed water for the boiler.

2. A heat and power plant according to claim 1, characterized in that it includes a heat exchanger (31) for heating the feed water to the boiler (12) by waste heat from the internal combustion engine (10).

3. A heat and power plant according to either of claims 1 or 2 characterized in means (33) for conveying combustion residues from the CFB-boiler to a heat exchanger (34), forming part of a circuit (35) comprising a heat exchanger (36) in the feed water supply conduit (37).

## Patentansprüche

1. Wärme-Kraft-Erzeugungsanlage mit einem Verbrennungsmotor (10), der einen Stromerzeuger antreibt und einen Wirbelbett-Kessel (12), dessen dampferzeugende Teile (40, 41, 44, 46, 47) mit einer Dampfturbine (13) verbunden sind, die einen weiteren Stromerzeuger (14) antreiben und mit Mitteln die dazu vorgesehen sind, die Abgase des Verbrennungsmotors als wirbelbetterzeugendes Gas zum Wirbelbett-Kessel (12) abzuleiten, dadurch gekennzeichnet, daß der Verbrennungsmotor ein Dieselmotor ist und daß die Anlage ferner einen Wärmetauscher (15) enthält, der mit einem Wärmeverbraucher (16) außerhalb der Anlage verbunden ist, um den Abdampf von der Turbine (13) zu Speisewasser für den Wirbelbett-Kessel zu kondensieren.

2. Wärme-Kraft-Erzeugungsanlage nach Anspruch 1, dadurch gekennzeichnet, daß ein Wärmetauscher (31) vorgesehen ist, der das Speisewasser für den Wirbelbett-Kessel (12) mittels der Abwärme des Verbrennungsmotors (10) erhitzt.

3. Wärme-Kraft-Erzeugungsanlage nach einem der Ansprüche 1 oder 2, dadurch gekennzeichnet, daß Fördermittel (33) für die Verbrennungsrückstände vom Wirbelbett-Kessel zu einem Wärmetauscher (34) vorgesehen sind, die Teil eines Kreislaufs (35) sind, der einen Wärmetauscher (36) in der Speisewasserzuführleitung (37) aufweist.

## Revendications

1. Centrale de co-génération de chaleur et de puissance comprenant un moteur à combustion interne (10) qui entraîne un générateur électrique, et une chaudière à lit fluidisé circulant LFC (12), dont les parties de génération de vapeur (40, 41, 44, 46, 47) sont reliées à une turbine à vapeur (13) qui entraîne un autre générateur électrique (14), des moyens étant prévus pour diriger les gaz d'échappement du moteur à combustion interne comme gaz de fluidisation vers la chaudière LFC (12), caractérisée en ce que le moteur à combustion interne est un moteur diesel, l'installation comprenant en outre un échangeur de chaleur (15) raccordé à un consommateur de chaleur (16) à l'extérieur de l'installation pour condenser la vapeur d'échappement de la turbine (13) en eau d'alimentation pour la chaudière.

2. Centrale de chaleur et de puissance suivant la revendication 1, caractérisée en ce qu'elle comprend un échangeur de chaleur (31) pour chauffer l'eau d'alimentation de la chaudière (12) au moyen de la chaleur perdue du moteur à combustion interne (10).

3. Centrale de chaleur et de puissance suivant l'une ou l'autre des revendications 1 et 2, caractérisée en ce qu'elle comprend des moyens (33) pour amener les résidus de combustion de la chaudière LFC à un échangeur de chaleur (34), faisant partie d'un circuit (35) comportant un échangeur de chaleur (36) placé dans la conduite d'amenée d'eau d'alimentation (37).